(19) Europäisches Patentamt
European Patent Office
Office européen des brevets

(11) EP 4 535 496 A1

(12) EUROPEAN PATENT APPLICATION
published in accordance with Art. 153(4) EPC

(43) Date of publication:
**09.04.2025 Bulletin 2025/15**

(21) Application number: **23909515.1**

(22) Date of filing: **20.10.2023**

(51) International Patent Classification (IPC):
***H01M 10/0567*** (2010.01) ***H01M 10/42*** (2006.01)
***H01M 10/0525*** (2010.01) ***H01M 4/13*** (2010.01)

(52) Cooperative Patent Classification (CPC):
**H01M 4/13; H01M 10/0525; H01M 10/0567; H01M 10/42;** Y02E 60/10

(86) International application number:
**PCT/CN2023/125748**

(87) International publication number:
**WO 2024/139581 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.12.2022 CN 202211701043**

(71) Applicant: **Zhuhai CosMX Battery Co., Ltd.**
**Zhuhai, Guangdong 519180 (CN)**

(72) Inventors:
- **WANG, Hai**
  **Zhuhai, Guangdong 519180 (CN)**
- **LI, Suli**
  **Zhuhai, Guangdong 519180 (CN)**

(74) Representative: **Murgitroyd & Company**
**165-169 Scotland Street**
**Glasgow G5 8PL (GB)**

# (54) BATTERY

(57) Disclosed is a battery, where the battery includes a positive electrode plate, a negative electrode plate, a separator, and an electrolyte solution, the electrolyte solution includes a lithium salt, an organic solvent, a first additive, and a second additive, the first additive is selected from a cyclic silane compound containing an unsaturated bond, and the second additive is selected from at least one of fluorinated cyclic carbonate compounds. Through a synergistic effect between a mass of the single-side negative electrode active material layer per unit area in the negative electrode plate, a specific surface area of the negative electrode active material, and the additives of the electrolyte solution, high-temperature cycling performance and high-temperature storage performance of the prepared battery can be effectively improved, and safety performance of the battery against thermal shock can be further improved.

EP 4 535 496 A1

## Description

### TECHNICAL FIELD

The present invention pertains to the field of battery technologies, and specifically, relates to a battery, and in particular, to a battery with good high-temperature cycling performance, good high-temperature storage performance, and high safety performance.

### BACKGROUND

Lithium-ion batteries are widely used in various types of electronic products due to their advantages such as high specific energy density and long cycle life. In recent years, lithium-ion batteries have also been widely used in electric vehicles, various power tools, and energy storage apparatuses. As the application scope of lithium-ion batteries expands, sizes of batteries are also becoming increasingly large, and safety performance of batteries becomes particularly important. Moreover, with the improvement of people's living standards and their desire for a better life, higher requirements are placed on battery energy density.

In order to improve energy density of a battery, increasing a voltage of a positive electrode material of a lithium-ion battery is a common approach. However, as a limiting voltage of the positive electrode material increases continuously, a specific capacity of the positive electrode material gradually increases, high-temperature performance of the battery deteriorates severely, and long cycle life cannot be ensured. Especially at a high voltage, during long-term cycle charge and discharge, a volume of the positive electrode material expands and causes severely cracks, the electrolyte solution enters the interior of the positive electrode material, destroying a structure of the positive electrode material, and release of active oxygen further accelerates oxidative decomposition of the electrolyte solution. In addition, an ultra-high specific capacity of a silicon negative electrode material can also improve energy density of the battery. However, particles on surface of the silicon negative electrode material are prone to breakage and have a large volume expansion rate, which is likely to lead to a relatively large quantity of side reactions of the electrolyte solution on the surface, ultimately causing a problem of severe capacity attenuation of the battery.

Currently, a surface of the positive electrode material is usually modified with an oxide coating, or positive electrode materials with different shapes and structures are prepared, but with a complex process, high costs, and a poor protection effect. Therefore, it is very important to invent a battery with better safety and higher cycle stability.

### SUMMARY

In order to solve an existing problem that stress generated by volume expansion of a positive electrode material and volume expansion of a negative electrode material in a battery at a high voltage damages a surface of an electrode material, causing a solid electrolyte film on an electrode surface to crack, and producing active oxygen oxidizing an electrolyte solution, the present invention provides a battery. The battery includes a positive electrode plate, a negative electrode plate, a separator, and an electrolyte solution, and additives of the electrolyte solution include a cyclic silane compound containing an unsaturated bond and a fluorinated cyclic carbonate compound. Through a synergistic effect between a mass of the single-side negative electrode active material layer per unit area in the negative electrode plate, a specific surface area of the negative electrode active material, and the additives of the electrolyte solution, high-temperature cycling performance and high-temperature storage performance of the prepared battery can be effectively improved, and safety performance of the battery against thermal shock can be further improved.

Objectives of the present invention are achieved by using the following technical solutions.

A battery is provided. The battery includes a positive electrode plate, a negative electrode plate, a separator, and an electrolyte solution, the electrolyte solution includes a lithium salt, an organic solvent, a first additive, and a second additive, the first additive is selected from a cyclic silane compound containing an unsaturated bond, and the second additive is selected from at least one of fluorinated cyclic carbonate compounds.

The negative electrode plate includes a negative electrode current collector and a negative electrode active material layer coated on a surface of either or both sides of the negative electrode current collector, and the negative electrode active material layer includes a negative electrode active material, a conductive agent, and a binder.

The battery satisfies the following relational expression:

$$115 \leq (a+1/5b)/(t\times p) \leq 700$$

where a is a mass percentage of the first additive in a total mass of the electrolyte solution in wt%, b is a mass percentage of the second additive in the total mass of the electrolyte solution in wt%, t is a mass of a single-side negative electrode active

material layer per unit area in $g/cm^2$, and p is a specific surface area of the negative electrode active material in $m^2/g$.

In one example, when the battery satisfies $115 \leq (a1/5b)/(t \times p) \leq 700$, additives per unit mass can effectively protect a negative electrode active material per unit specific surface area to form a suitable protective layer on a surface of the negative electrode active material, so as to fully suppress volume expansion of the negative electrode active material and significantly improve high-temperature cycling performance, high-temperature storage performance, and safety performance of the battery. When the battery does not satisfy $115 \leq (a + 1/5b)/(t \times p) \leq 700$, additives per unit mass are insufficient to provide adequate protection for the negative electrode active material per unit specific surface area or a formed protective layer is too thick. Consequently, high-temperature cycling performance, high-temperature storage performance, and safety performance of the battery are not improved significantly.

In one example, $130 \leq (a + 1/5b)/(t \times p) \leq 200$.

In one example, $(a + 1/5b)/t \times p)$ is 115, 120, 130, 140, 150, 160, 170, 180, 200, 220, 250, 280, 300, 320, 350, 380, 400, 420, 450, 480, 500, 520, 550, 580, 600, 620, 650, 680, or 700.

In one example, 0.05 wt% ≤ a wt% ≤ 5 wt%, that is, the mass percentage a of the mass of the first additive in the total mass of the electrolyte solution is 0.05 wt%, 0.1 wt%, 0.2 wt%, 0.3 wt%, 0.4 wt%, 0.5 wt%, 0.6 wt%, 0.8 wt%, 0.9 wt%, 1 wt%, 1.2 wt%, 1.5 wt%, 1.8 wt%, 2 wt%, 2.2 wt%, 2.5 wt%, 2.8 wt%, 3.0 wt%, 3.4 wt%, 3.5 wt%, 4 wt%, 4.5 wt%, 4.8 wt%, or 5 wt%.

In one example, 3.5 wt% ≤ b wt% ≤ 15 wt%, that is, the mass percentage b of the second additive in the total mass of the electrolyte solution is 3.5 wt%, 4 wt%, 4.5 wt%, 5 wt%, 6 wt%, 7 wt%, 8 wt%, 9 wt%, 10 wt%, 11 wt%, 12 wt%, 13 wt%, 14 wt%, or 15 wt%.

In one example, $0.0045\ g/cm^2 \leq t\ g/cm^2 \leq 0.028\ g/cm^2$, that is, the mass t of the single-side negative electrode active material layer per unit area is $0.005\ g/cm^2$, $0.006\ g/cm^2$, $0.008\ g/cm^2$, $0.009\ g/cm^2$, $0.01\ g/cm^2$, $0.11\ g/cm^2$, $0.012\ g/cm^2$, $0.013\ g/cm^2$, $0.014\ g/cm^2$, $0.15\ g/cm^2$, $0.017\ g/cm^2$, $0.018\ g/cm^2$, or $0.02\ g/cm^2$.

In one example, $0.55\ m^2/g \leq p\ m^2/g \leq 2.35\ m^2/g$, where the specific surface area p of the negative electrode active material is $0.6\ m^2/g$, $0.7\ m^2/g$, $0.8\ m^2/g$, $0.9\ m^2/g$, $1.0\ m^2/g$, $1.1\ m^2/g$, $1.2\ m^2/g$, $1.3\ m^2/g$, $1.4\ m^2/g$, $1.5\ m^2/g$, $1.6\ m^2/g$, $1.7\ m^2/g$, $1.8\ m^2/g$, $1.9\ m^2/g$, or $2\ m^2/g$.

In one example, the cyclic silane compound containing an unsaturated bond is a six-membered cyclic silane compound containing a carbon-carbon double bond.

In one embodiment, the cyclic silane compound containing an unsaturated bond has a structural formula shown in Formula I:

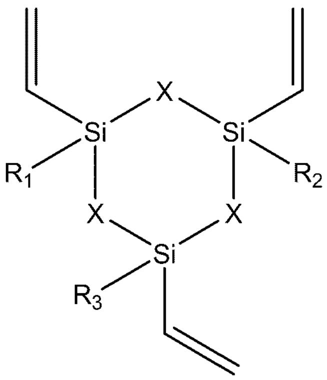

Formula I

where in Formula I, $R_1$, $R_2$, and $R_3$ are the same or different and are independently selected from hydrogen, halogen, substituted or unsubstituted alkyl, substituted or unsubstituted alkenyl, substituted or unsubstituted cycloalkyl, or substituted or unsubstituted aryl; and when "substituted" is used, a substituent is halogen or alkyl; and X is selected from $-CH_2-$, -O-, -S-, NH, PH, or BH.

In one example, $R_1$, $R_2$, and $R_3$ are the same or different and are independently selected from hydrogen, halogen, substituted or unsubstituted $C_{1-20}$ alkyl, substituted or unsubstituted $C_{2-20}$ alkenyl, substituted or unsubstituted 3-20 membered cycloalkyl, or substituted or unsubstituted $C_{6-20}$ aryl; and when "substituted" is used, the substituent is halogen or $C_{1-20}$ alkyl.

In one example, $R_1$, $R_2$, and $R_3$ are the same or different and are independently selected from hydrogen, halogen, substituted or unsubstituted $C_{1-12}$ alkyl, substituted or unsubstituted $C_{2-12}$ alkenyl, substituted or unsubstituted 3-12 membered cycloalkyl, or substituted or unsubstituted $C_{6-12}$ aryl; and when "substituted" is used, the substituent is halogen or $C_{1-12}$ alkyl.

In one example, $R_1$, $R_2$, and $R_3$ are the same or different and are independently selected from hydrogen, halogen, substituted or unsubstituted $C_{1-6}$ alkyl, substituted or unsubstituted $C_{2-6}$ alkenyl, substituted or unsubstituted 3-6 membered cycloalkyl, or substituted or unsubstituted $C_{6-10}$ aryl; and when "substituted" is used, the substituent is

halogen or $C_{1-6}$ alkyl.

In one example, $R_1$, $R_2$, and $R_3$ are the same or different and are independently selected from hydrogen, halogen, substituted or unsubstituted $C_{1-3}$ alkyl, substituted or unsubstituted $C_{2-3}$ alkenyl, substituted or unsubstituted 3-6 membered cycloalkyl, or substituted or unsubstituted $C_{6-8}$ aryl; and when "substituted" is used, the substituent is halogen or $C_{1-3}$ alkyl.

In one example, the first additive may be prepared by using a method known in the art, or may be purchased commercially.

In one example, the first additive is selected from at least one of the following compounds shown in Formula I-1 to Formula I-15:

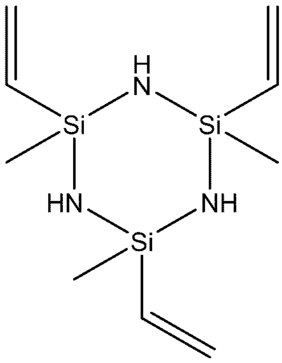

Formula I-1,

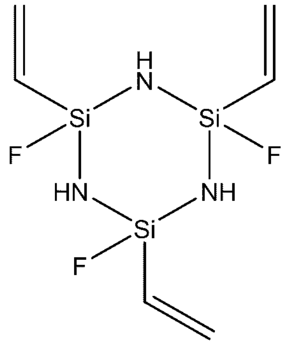

Formula I-2,

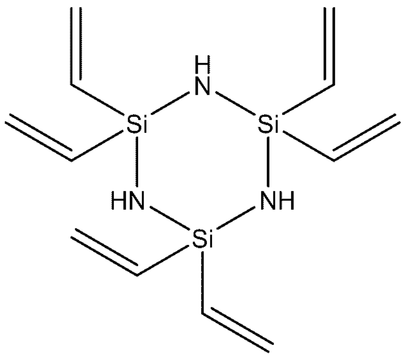

Formula I-3,

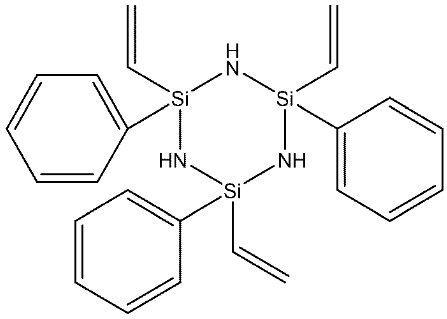

Formula I-4,

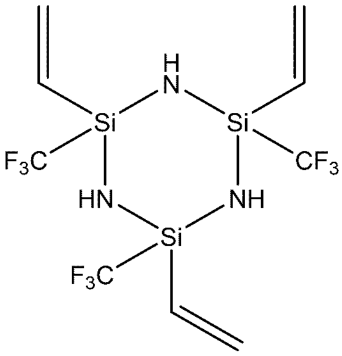

Formula I-5,

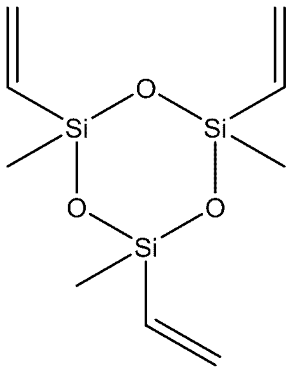

Formula I-6,

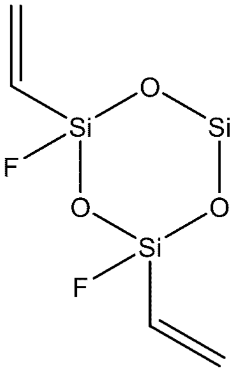
Formula I-7,

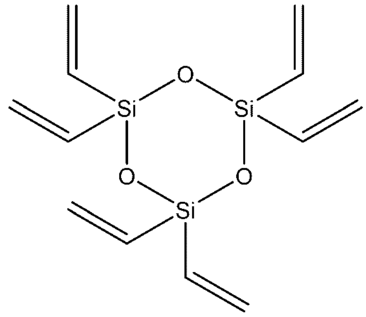
Formula I-8,

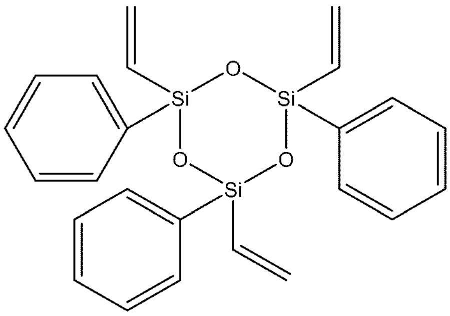
Formula I-9,

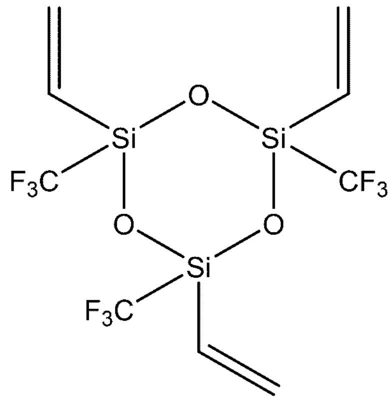
Formula I-10,

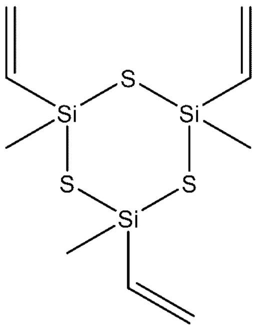
Formula I-11,

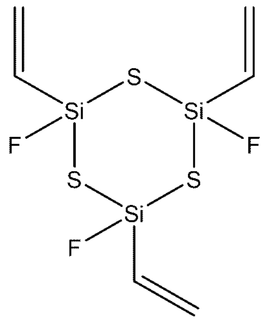
Formula I-12 ,

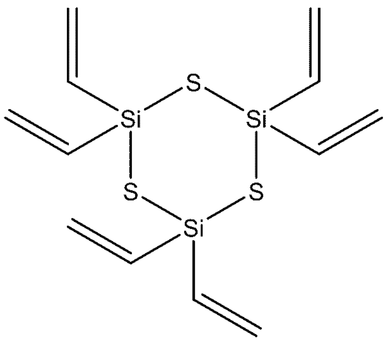
Formula I-13,

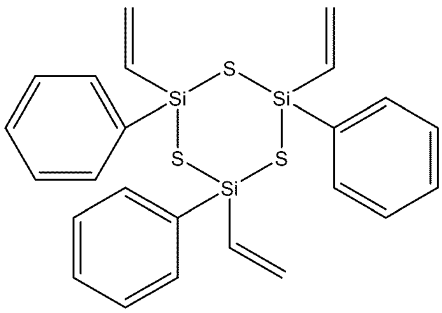
Formula I-14,

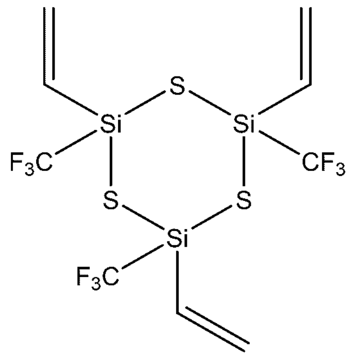

Formula I-15.

In one example, the fluorinated cyclic carbonate compound has at least one of the structural formulas shown in Formula II:

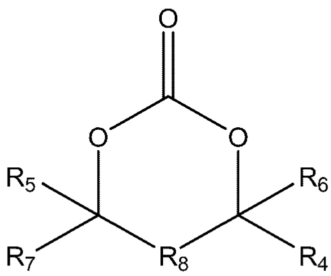

Formula II

where in Formula II, $R_4$, $R_5$, $R_6$, and $R_7$ are the same or different and are independently selected from hydrogen, fluorine, alkyl, or fluorine-substituted alkyl, and at least one group of $R_4$, $R_5$, $R_6$, or $R_7$ is selected from fluorine or fluorine-substituted alkyl; and $R_8$ is absent, -CH2- or fluorine substitution.

In one example, $R_4$, $R_5$, $R_6$, and $R_7$ are the same or different and are independently selected from hydrogen, fluorine, $C_{1-12}$ alkyl, or fluorine-substituted $C_{1-12}$ alkyl, and at least one group of $R_4$, $R_5$, $R_6$, or $R_7$ is selected from fluorine or fluorine-substituted $C_{1-12}$ alkyl.

In one example, $R_4$, $R_5$, $R_6$, and $R_7$ are the same or different and are independently selected from hydrogen, fluorine, $C_{1-6}$ alkyl, or fluorine-substituted $C_{1-6}$ alkyl, and at least one group of $R_4$, $R_5$, $R_6$, or $R_7$ is selected from fluorine or fluorine-substituted $C_{1-6}$ alkyl.

In one example, $R_4$, $R_5$, $R_6$, and $R_7$ are the same or different and are independently selected from hydrogen, fluorine, $C_{1-3}$ alkyl, or fluorine-substituted $C_{1-3}$ alkyl, and at least one group of $R_4$, $R_5$, $R_6$, or $R_7$ is selected from fluorine or fluorine-substituted $C_{1-3}$ alkyl.

In one example, the second additive is selected from at least one of the following compounds shown in Formula II-1 to Formula II-8:

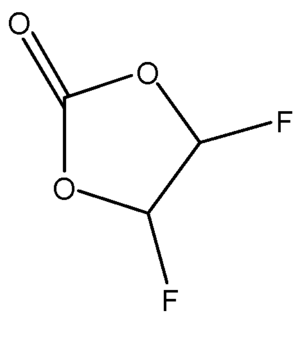

Formula II-1,

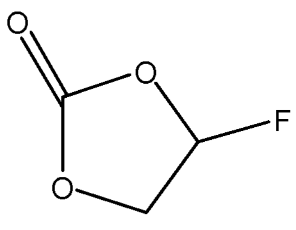

Formula II-2,

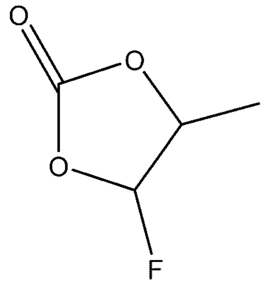 Formula II-3, 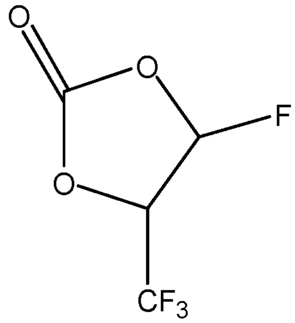 Formula II-4, 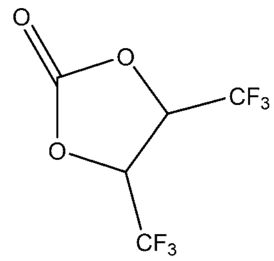

Formula II-5, 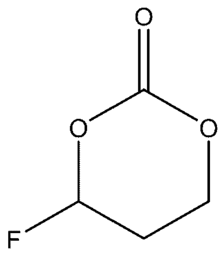 Formula II-6, 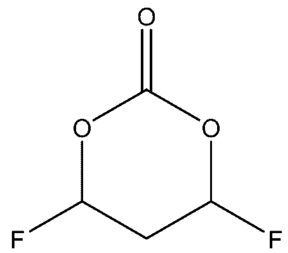 ,Formula II-7

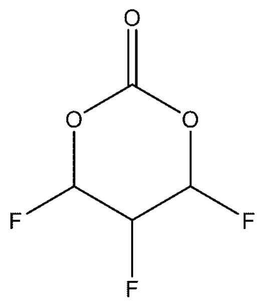 ,Formula II-8, 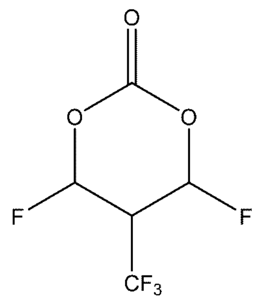 Formula II-9.

In one example, the lithium salt is selected from one or more of lithium hexafluorophosphate ($LiPF_6$), lithium difluorophosphate ($LiPO_2F_2$), lithium difluoro(oxalato)borate(LiDFOB), lithium bis((trifluoromethanesulfonyl)azanide, lithium difluorobis(oxalato)phosphate, lithium tetrafluoroborate, lithium bis(oxalate)borate, lithium hexafluoroantimonate, lithium hexafluoroarsenate, lithium bis(trifluoromethyl sulfonyl)imine, lithium bis(pentafluoroethylsulfonyl)imine, tri(trifluoromethyl sulfonyl) methyllithium, or lithium bis(trifluoromethyl sulfonyl)imine.

In one example, a mass of the lithium salt accounts for 10 wt% to 15 wt% of a total mass of the electrolyte solution, for example, 10 wt%, 11 wt%, 12 wt%, 13 wt%, 14 wt%, or 15 wt%.

In one example, the organic solvent is selected from carbonate and/or carboxylate, and the carbonate is selected from one or more of the following fluorinated or unsubstituted solvents: ethylene carbonate (EC), propylene carbonate (PC), dimethyl carbonate, diethyl carbonate (DEC), or ethyl methyl carbonate; and the carboxylate is selected from one or more of the following fluorinated or unsubstituted solvents: propyl acetate, n-butyl acetate, isobutyl acetate, n-amyl acetate, isoamyl acetate, propyl propionate (PP), ethyl propionate (EP), methyl butyrate, or ethyl n-butyrate.

In one example, a mass of the organic solvent accounts for 65 wt% to 80 wt% of a total mass of the electrolyte solution.

In one example, the positive electrode plate includes a positive electrode current collector and a positive electrode active material layer coated on a surface of either or both sides of the positive electrode current collector, and the positive electrode active material layer includes a positive electrode active material, a conductive agent, and a binder.

In one example, mass percentages of components in the positive electrode active material layer are as follows: 80 wt% to 99.8 wt% (for example, 80 wt%, 85 wt%, 90 wt%, 95 wt%, or 99.8 wt%) for the positive electrode active material, 0.1 wt% to 10 wt% (for example, 0.1 wt%, 0.5 wt%, 1 wt%, 3 wt%, 5 wt%, 7 wt%, or 10 wt%) for the conductive agent, and 0.1 wt% to 10 wt% (for example, 0.1 wt%, 0.5 wt%, 1 wt%, 3 wt%, 5 wt%, 7 wt%, or 10 wt%) for the binder.

Preferably, the mass percentages of the components in the positive electrode active material layer are as follows: 90 wt% to 99.6 wt% for the positive electrode active material, 0.2 wt% to 5 wt% for the conductive agent, and 0.2 wt% to 5 wt% for the binder.

In one example, mass percentages of components in the negative electrode active material layer are as follows: 80 wt% to 99.8 wt% (for example, 80 wt%, 85 wt%, 90 wt%, 95 wt%, or 99.8 wt%) for the negative electrode active material,

0.1 wt% to 10 wt% (for example, 0.1 wt%, 0.5 wt%, 1 wt%, 3 wt%, 5 wt%, 7 wt%, or 10 wt%) for the conductive agent, and 0.1 wt% to 10 wt% (for example, 0.1 wt%, 0.5 wt%, 1 wt%, 3 wt%, 5 wt%, 7 wt%, or 10 wt%) for the binder.

Preferably, the mass percentages of the components in the negative electrode active material layer are as follows: 90 wt% to 99.6 wt% for the negative electrode active material, 0.2 wt% to 5 wt% for the conductive agent, and 0.2 wt% to 5 wt% for the binder.

In one example, the conductive agent is selected from at least one of conductive carbon black (SP), acetylene black, Ketjen black, conductive graphite, conductive carbon fiber, carbon nanotubes (such as single-walled carbon nanotubes (SWCNTs), metal powder, or carbon fiber.

In one example, the binder is selected from at least one of sodium carboxymethyl cellulose, styrene-butadiene latex, polytetrafluoroethylene, polyethylene oxide, or polyvinylidene fluoride (PVDF).

In one example, the negative electrode active material is at least one of a silicon-based negative electrode material or a carbon-based negative electrode material.

In one example, the carbon-based negative electrode material is selected from at least one of artificial graphite, natural graphite, mesocarbon microbeads, hard carbon, or soft carbon.

In one example, the silicon-based negative electrode material is selected from at least one of a silicon-carbon negative electrode material or a silicon-oxygen negative electrode material.

In one example, the negative electrode active material is a silicon-carbon and graphite material, or a silicon-oxygen and graphite material.

In one example, the positive electrode active material is selected from one or more of lithium transition metal oxide, lithium iron phosphate, lithium manganate. The lithium transition metal oxide has a chemical formula of $Li_{1+x}Ni_yCo_zM_{(1-y-z)}O_2$, where $-0.1 \leq x \leq 1$, $0 \leq y \leq 1$, $0 \leq z \leq 1$, and $0 \leq y + z \leq 1$. M is one or more of Mg, Zn, Ga, Ba, Al, Fe, Cr, Sn, V, Mn, Sc, Ti, Nb, Mo, or Zr.

Beneficial effects of the present invention are as follows:

The present invention provides a battery. The battery includes a positive electrode plate, a negative electrode plate, a separator, and an electrolyte solution, the electrolyte solution includes a lithium salt, an organic solvent, a first additive, and a second additive, the first additive is selected from a cyclic silane compound containing an unsaturated bond, and the second additive is selected from at least one of fluorinated cyclic carbonate compounds.

The negative electrode plate includes a negative electrode current collector and a negative electrode active material layer coated on a surface of either or both sides of the negative electrode current collector, and the negative electrode active material layer includes a negative electrode active material, a conductive agent, and a binder.

The battery satisfies the following relational expression:

$$115 \leq (a + 1/5b)/(t \times p) \leq 700$$

where a is a mass percentage of the first additive in a total mass of the electrolyte solution in wt%, b is a mass percentage of the second additive in the total mass of the electrolyte solution in wt%, t is a mass of a single-side negative electrode active material layer per unit area in g/cm$^2$, and p is a specific surface area of the negative electrode active material in m$^2$/g.

It is found, through correlation between a specific surface area of the negative electrode active material per unit area and content of the additives, that there is a synergistic effect between them. To be specific, volume expansion of the negative electrode material can be effectively suppressed by adjusting the mass of the single-side negative electrode active material layer per unit area in the negative electrode plate, the specific surface area of the negative electrode active material, and the additives of the electrolyte solution, to avoid a problem that stress generated by volume expansion of the negative electrode material in damages a surface of an electrode material, causing a solid electrolyte film on an electrode surface to crack, and oxidizing an electrolyte solution. In addition, high-temperature cycling performance and high-temperature storage performance of the prepared battery can be significantly improved, and safety performance of the battery against thermal shock can be further improved.

Specifically, the cyclic silane compound containing an unsaturated bond in the electrolyte solution has higher stability than a chain silane compound containing an unsaturated bond due to its cyclic structural characteristic. At a high voltage, a silicon-carbon bond formed by a cyclic silicon atom and a branched molecule is broken due to oxidative decomposition, and a broken silicon-oxygen bond is further oxidized. Some of oxidation products and the organic solvent (such as EC) in the electrolyte solution undergo polymerization reaction to form a polymer that can form a protective film not only on surface of the positive electrode, but also on a surface of the negative electrode. The cyclic silane compound containing an unsaturated bond can further generate a compound containing an -Si-X-F- bond after continuous oxidation, and the compound containing the -Si-X-F- bond can participate in film formation on surfaces of positive and negative electrodes.

Under conventional high-temperature and fully charged conditions, the solid electrolyte film on the electrode surface has poor thermal stability and is prone to deformation, loosening, and pore enlargement, leading to further

reduction of the solvent at the negative electrode. Unsaturated double bonds on side chains of cyclic silane compounds containing unsaturated bonds in the present invention can undergo polymerization reaction on the surface of the negative electrode to form a mesh protective film containing Si-X-F, and the formed mesh protective film containing Si-X-F has a specific toughness, which can enhance robustness and structural stability of a SEI film and suppress deformation of the SEI film. This effectively suppresses volume expansion of the negative electrode material. On this basis, further adjusting the mass of the single-side negative electrode active material layer per unit area in the negative electrode plate and the specific surface area of the negative electrode active material to enable the specific surface area of the negative electrode material per unit area to match the content of the additives can significantly improve high-temperature storage performance and high-temperature cycling performance of the battery. Moreover, the introduced second additive and the first additive can work together on the surface of the negative electrode to form a dense and repairable polymeric network layer on the surface of the negative electrode without increasing impedance, further suppressing volume expansion of the negative electrode material. The two additives work synergistically to protect the positive and negative electrodes and prevent further decomposition of the electrolyte solution.

## DETAILED DESCRIPTION OF THE EMBODIMENTS

The preparation method in the present invention is further described in detail below with reference to specific embodiments. It should be understood that the following embodiments are merely intended to illustrate and explain the present invention as examples, and shall not be construed as limiting the protection scope of the present invention. Any technology implemented based on the foregoing content of the present invention falls within the intended protection scope of the present invention.

Experimental methods used in the following examples are conventional methods, unless otherwise specified. Reagents, materials, and the like used in the following examples are all commercially available, unless otherwise specified.

A lithium-ion battery was prepared through the following steps:

(1) Preparation of a positive electrode plate

Positive electrode active materials lithium cobaltate ($LiCoO_2$), polyvinylidene fluoride (PVDF), SP (super P), and carbon nanotubes (CNT) were mixed at a mass ratio of 96:2:1.5:0.5, and were added with N-methylpyrrolidone (NMP). The mixture was stirred under action of a vacuum blender until the mixture became a uniform fluid positive electrode active slurry. Both surfaces of an aluminum foil were coated evenly with the positive electrode active slurry. The coated aluminum foil was dried, then rolled, and cut, to obtain a required positive electrode plate.

(2) Preparation of a negative electrode plate

Negative electrode active materials silicon-carbon composite and artificial graphite (containing 5% for silicon-carbon composite and 95% for artificial graphite), sodium carboxymethyl cellulose (CMC-Na), styrene-butadiene rubber, conductive carbon black (SP), and single-walled carbon nanotubes (SWCNTs) were mixed at a mass ratio of 94.5:2.5:1.5:1:0.5, and were added with deionized water. The mixture was stirred under action of a vacuum blender to obtain a negative electrode active slurry. Both sides of a copper foil were coated with evenly with the negative electrode active slurry. The coated copper foil was dried at room temperature, was then transferred to an oven for drying at 80°C for 10 hours, and was cold-pressed and cut, to obtain a negative electrode plate. A mass of a single-side negative electrode active material layer per unit area was t, expressed in $g/cm^2$, and a specific surface area of the negative electrode active material was p, expressed in $m^2/g$.

(3) Preparation of an electrolyte solution

In an argon-filled glovebox ($H_2O$ < 0.1 ppm, $O^2$ < 0.1 ppm), EC, PC, DEC, and PP (where EC is ethylene carbonate, PC is propylene carbonate, DEC is diethyl carbonate, and PP is propyl propionate) were uniformly mixed at a mass ratio of 10:10:20:60, then were added with fully dried lithium hexafluorophosphate (LiPF6) with 13 wt% of a total mass of the electrolyte solution, and after dissolution, were added with 1,3-propane sultone with 3 wt%, 1,3,6-hexanetricarbonitrile (HTCN) with 3 wt%, and adiponitrile (ADN) with 3 wt% of the total mass of the electrolyte solution, the first additive, and the second additive. The electrolyte solution was prepared after being mixed uniformly.

(4) Preparation of a lithium-ion battery

The positive electrode plate in step (1), the negative electrode plate in step (2), and a separator were stacked in an

order of the positive electrode plate, the separator, and the negative electrode plate, and then were rolled up to obtain a battery cell. The battery cell was placed in an outer packaging aluminum foil, and the electrolyte solution in step (3) was injected into the outer packaging, and the lithium-ion battery was obtained through processes of vacuum packaging, standing, formation, shaping, sorting, and the like. A charge and discharge range of the battery in the present invention ranges from 3 V to 4.5 V.

Examples 1 to 14 and Comparative Examples 1 to 5

Examples 1 to 14 are the same as Comparative Examples 1 to 5, except that selection and content of the first additive and the second additive vary, and a mass t of a single-side negative electrode active material layer per unit area and a specific surface area p of a negative electrode active material vary, specifically as shown in Table 1.

Example 1 is used as an example, and (a + 1/5b)/(t × p) = (0.2 + 1/5*5)/(0.015*0.6) = 133.3.

Table 1 Composition of batteries in the Examples and Comparative Examples

| | a% | b% | t g/cm$^2$ | p m$^2$/g | (a+1/5b)/(t×p) |
|---|---|---|---|---|---|
| Example 1 | I-1/0.2 | II-1/5 | 0.015 | 0.6 | 133.3 |
| Example 2 | I-1/0.5 | II-1/7 | 0.018 | 0.7 | 150.8 |
| Example 3 | I-1/1 | II-1/10 | 0.010 | 1.6 | 187.5 |
| Example 4 | I-1/2 | II-1/12 | 0.013 | 1.8 | 188.0 |
| Example 5 | I-1/0.5 | II-1/15 | 0.020 | 0.9 | 194.4 |
| Example 6 | I-1/2 | II-1/12 | 0.0035 | 1.8 | 698.4 |
| Example 7 | I-1/2 | II-1/12 | 0.013 | 2.5 | 135.4 |
| Example 8 | I-1/2 | II-1/4 | 0.013 | 1.8 | 119.7 |
| Example 9 | I-1/6 | II-1/12 | 0.013 | 1.8 | 359.0 |
| Example 10 | I-2/2 | II-1/12 | 0.013 | 1.8 | 188.0 |
| Example 11 | I-3/2 | II-1/12 | 0.013 | 1.8 | 188.0 |
| Example 12 | I-4/2 | II-1/12 | 0.013 | 1.8 | 188.0 |
| Example 13 | I-1/2 | II-2/12 | 0.013 | 1.8 | 188.0 |
| Example 14 | I-1/2 | II-3/12 | 0.013 | 1.8 | 188.0 |
| Example 15 | I-6/2 | II-1/12 | 0.013 | 1.8 | 188.0 |
| Comparative Example 1 | I-1/2 | II-1/12 | 0.002 | 1.8 | 1222.2 |
| Comparative Example 2 | I-1/2 | II-1/12 | 0.013 | 5.0 | 67.7 |
| Comparative Example 3 | I-1/0 | II-1/12 | 0.013 | 1.8 | 102.6 |
| Comparative Example 4 | I-1/2 | II-1/2 | 0.013 | 1.8 | 102.6 |
| Comparative Example 5 | I-1/2 | II-1/0 | 0.013 | 1.8 | 85.5 |
| Comparative Example 6 | I-1/0.05 | II-1/12 | 0.013 | 1.8 | 104.7 |
| Comparative Example 7 | I-1/0.5 | II-1/5 | 0.020 | 0.9 | 83.3 |
| Comparative Example 8 | I-1/0.2 | II-1/5 | 0.028 | 0.6 | 71.4 |
| Comparative Example 9 | I-1/0.2 | II-1/5 | 0.015 | 2.35 | 34.0 |

The following performance tests were conducted on batteries in the Examples and Comparative Examples:

(1) 45°C cycling performance test

The batteries in Table 1 were charged and discharged for 800 cycles within a charge/discharge cut-off voltage range (3.0 V to 4.53 V) at a rate of 1C at 45°C. A discharge capacity of the first cycle was recorded as x1 mAh, and a discharge capacity of the $N^{th}$ cycle was recorded as y1 mAh. The capacity of the $N^{th}$ cycle was divided by the capacity of the first cycle to obtain cycle capacity retention rate R1 = y1/x1 of the $N^{th}$ cycle.

(2) 85°C High-temperature storage test

The batteries were first left standing for 10 minutes after undergoing formation and capacity grading, then were discharged at 0.2C to 3 V, were left standing for 10 minutes, then were fully charged at 0.5C with a cut-off rate of 0.05C, and were left standing for 10 minutes. The voltage, internal resistance, and thickness of the fully charged battery were tested at 25±5°C. After the fully charged battery was placed in an 85°C oven and kept for 8 hours, the hot battery was taken out to test its voltage, internal resistance and thickness, and capacity retention and recovery tests were conducted.

(3) Safety Performance test

The battery cells obtained after capacity grading were charged at 0.5C to an upper cut-off voltage, and a constant voltage was maintained to 0.05C. At an ambient temperature of 25°C±5°C, a fully charged sample was placed in a thermal shock test chamber, then the temperature was raised to 140°C±2°C at a rate of 15°C±2°C/min, and this temperature was maintained for 42 minutes before the test ends. Whether the battery catches fire or explodes was observed. If there was no fire or explosion, the safety performance was identified as "safe" and denoted by "Yes"; and if only fire occurs, the safety performance was identified as "fire", if only explosion occurs, the safety performance was identified as "explosion", or if both fire and explosion occur, the safety performance was identified as "fire and explosion" and denoted as "No".

The test results are shown in the following table 2.

Table 2 Performance test results of batteries in the Examples and Comparative Examples

| | 45°C high-temperature cycling capacity retention rate (%) | | | 85°C high-temperature storage for 8 hours | | 140°C thermal shock test |
|---|---|---|---|---|---|---|
| | 300 cycles | 500 cycles | 800 cycles | Capacity retention rate (%) | Thickness expansion rate (%) | |
| Example 1 | 96.30 | 88.59 | 79.25 | 93.02 | 1.98 | Yes |
| Example 2 | 96.67 | 85.64 | 80.82 | 89.92 | 5.08 | Yes |
| Example 3 | 96.59 | 85.06 | 78.25 | 89.31 | 5.69 | Yes |
| Example 4 | 97.67 | 88.81 | 83.60 | 93.25 | 1.75 | Yes |
| Example 5 | 96.38 | 87.87 | 78.96 | 92.27 | 2.73 | Yes |
| Example 6 | 85.10 | 75.94 | 68.92 | 69.37 | 10.63 | Yes |
| Example 7 | 82.83 | 75.41 | 68.89 | 68.89 | 11.11 | Yes |
| Example 8 | 84.76 | 76.84 | 69.61 | 70.19 | 9.81 | Yes |
| Example 9 | 83.65 | 77.62 | 71.16 | 70.91 | 9.09 | Yes |
| Example 10 | 92.62 | 82.94 | 74.23 | 82.74 | 12.26 | Yes |
| Example 11 | 91.58 | 85.44 | 74.95 | 85.22 | 9.78 | Yes |
| Example 12 | 91.20 | 84.37 | 75.11 | 84.16 | 10.84 | Yes |
| Example 13 | 92.44 | 84.43 | 77.86 | 84.22 | 10.78 | Yes |
| Example 14 | 91.97 | 84.69 | 76.87 | 84.48 | 10.52 | Yes |
| Example 15 | 91.82 | 83.13 | 74.83 | 84.98 | 10.09 | Yes |
| Comparative Example 1 | 62.37 | 55.68 | 52.14 | 67.37 | 17.63 | No |
| Comparative Example 2 | 62.44 | 56.36 | 52.09 | 67.44 | 17.56 | No |
| Comparative Example 3 | 63.20 | 56.21 | 52.74 | 68.20 | 16.80 | No |
| Comparative Example 4 | 63.61 | 56.60 | 51.96 | 68.61 | 16.39 | No |
| Comparative Example 5 | 58.38 | 51.88 | 47.87 | 55.87 | 21.11 | No |
| Comparative Example 6 | 72.13 | 64.58 | 60.08 | 73.19 | 14.98 | No |
| Comparative Example 7 | 68.22 | 59.776 | 50.777 | 61.89 | 13.87 | No |
| Comparative Example 8 | 72.16 | 68.98 | 61.09 | 73.39 | 12.98 | No |

(continued)

| | 45°C high-temperature cycling capacity retention rate (%) | | | 85°C high-temperature storage for 8 hours | | 140°C thermal shock test |
|---|---|---|---|---|---|---|
| | 300 cycles | 500 cycles | 800 cycles | Capacity retention rate (%) | Thickness expansion rate (%) | |
| Comparative Example 9 | 71.87 | 68.03 | 61.67 | 66.89 | 13.92 | No |

The implementations of the present invention are described above. However, the present invention is not limited to the foregoing implementations. Any modifications, equivalent replacements, improvements, and the like within the principle of the present invention shall fall within the scope of protection of the present invention.

## Claims

1. A battery, **characterized in that** the battery comprises a positive electrode plate, a negative electrode plate, a separator, and an electrolyte solution, the electrolyte solution comprises a lithium salt, an organic solvent, a first additive, and a second additive, the first additive is selected from a cyclic silane compound containing an unsaturated bond, and the second additive is selected from at least one of fluorinated cyclic carbonate compounds;

    the negative electrode plate comprises a negative electrode current collector and a negative electrode active material layer coated on a surface of either or both sides of the negative electrode current collector, and the negative electrode active material layer comprises a negative electrode active material, a conductive agent, and a binder; and
    the battery satisfies following relational expression:

    $$115 \leq (a + 1/5b)/(t \times p) \leq 700$$

    wherein a is a mass percentage of the first additive in a total mass of the electrolyte solution in wt%, b is a mass percentage of the second additive in the total mass of the electrolyte solution in wt%, t is a mass of a single-side negative electrode active material layer per unit area in g/cm$^2$, and p is a specific surface area of the negative electrode active material in m$^2$/g.

2. The battery according to claim 1, **characterized in that** the cyclic silane compound containing an unsaturated bond has a structural formula shown in Formula I:

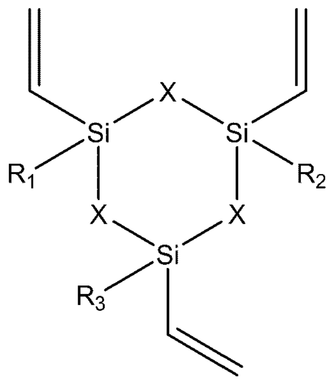

Formula I

wherein in Formula I, $R_1$, $R_2$, and $R_3$ are the same or different and are independently selected from hydrogen, halogen, substituted or unsubstituted alkyl, substituted or unsubstituted alkenyl, substituted or unsubstituted cycloalkyl, or substituted or unsubstituted aryl; and when "substituted" is used, a substituent is halogen or alkyl; and X is selected from $-CH_2-$, -O-, -S-, NH, PH, or BH.

**3.** The battery according to claim 2, **characterized in that** $R_1$, $R_2$, and $R_3$ are the same or different and are independently selected from hydrogen, halogen, substituted or unsubstituted $C_{1-20}$ alkyl, substituted or unsubstituted $C_{2-20}$ alkenyl, substituted or unsubstituted 3-20 membered cycloalkyl, or substituted or unsubstituted $C_{6-20}$ aryl; and when "substituted" is used, the substituent is halogen or $C_{1-20}$ alkyl; and

preferably, $R_1$, $R_2$, and $R_3$ are the same or different and are independently selected from hydrogen, halogen, substituted or unsubstituted $C_{1-12}$ alkyl, substituted or unsubstituted $C_{2-12}$ alkenyl, substituted or unsubstituted 3-12 membered cycloalkyl, or substituted or unsubstituted $C_{6-12}$ aryl; and when "substituted" is used, the substituent is halogen or $C_{1-12}$ alkyl; or

preferably, $R_1$, $R_2$, and $R_3$ are the same or different and are independently selected from hydrogen, halogen, substituted or unsubstituted $C_{1-6}$ alkyl, substituted or unsubstituted $C_{2-6}$ alkenyl, substituted or unsubstituted 3-6 membered cycloalkyl, or substituted or unsubstituted $C_{6-10}$ aryl; and when "substituted" is used, the substituent is halogen or $C_{1-6}$ alkyl; or

preferably, $R_1$, $R_2$, and $R_3$ are the same or different and are independently selected from hydrogen, halogen, substituted or unsubstituted $C_{1-3}$ alkyl, substituted or unsubstituted $C_{2-3}$ alkenyl, substituted or unsubstituted 3-6 membered cycloalkyl, or substituted or unsubstituted $C_{6-8}$ aryl; and when "substituted" is used, the substituent is halogen or $C_{1-3}$ alkyl.

**4.** The battery according to any one of claims 1 to 3, **characterized in that** the first additive is selected from at least one of following compounds shown in Formula I-1 to Formula I-15:

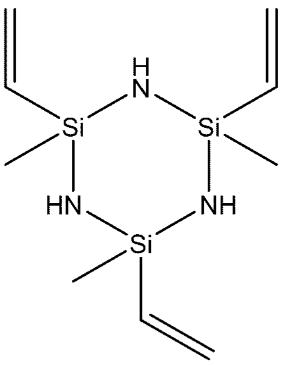

Formula I-1,

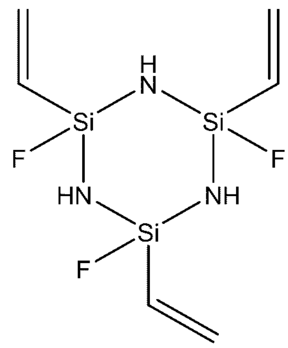

Formula I-2,

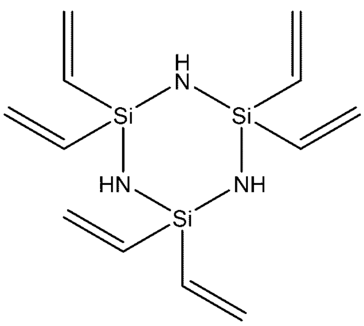

Formula I-3,

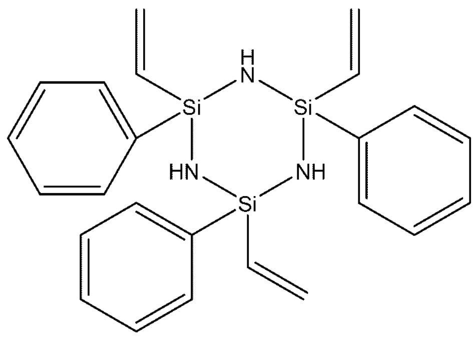

Formula I-4,

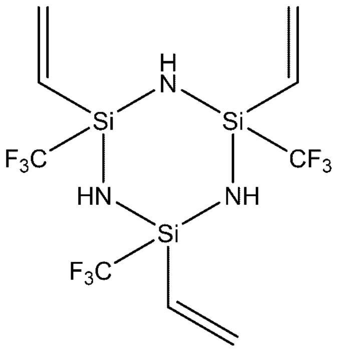

Formula I-5,

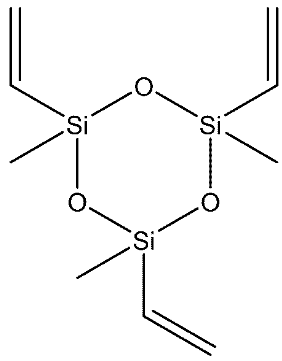

Formula I-6,

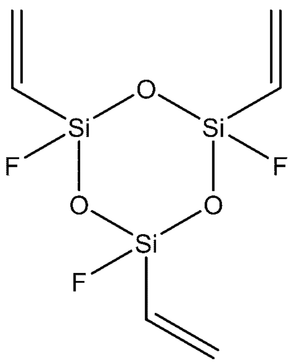

Formula I-7,

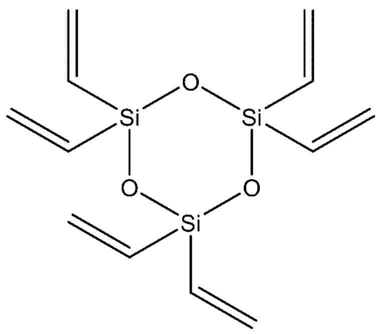

Formula I-8,

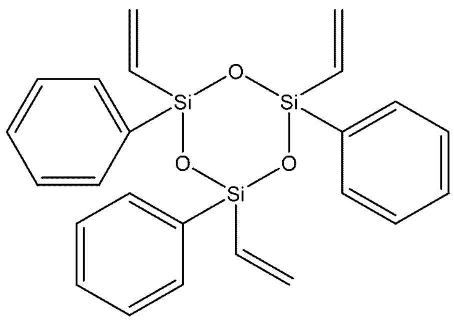

Formula I-9,

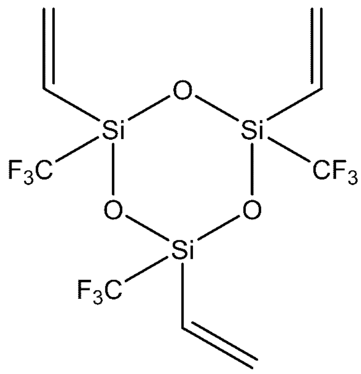

Formula I-10,

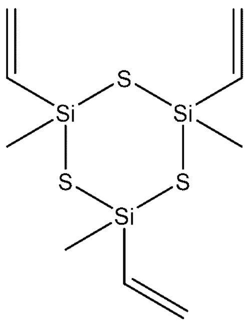

Formula I-11,

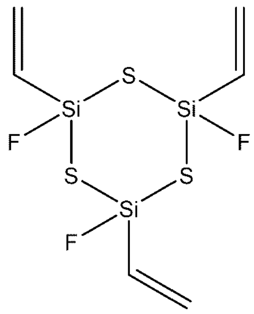

Formula I-12,

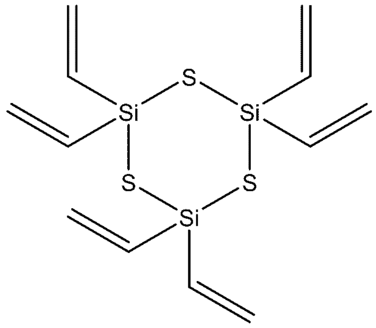
Formula I-13,

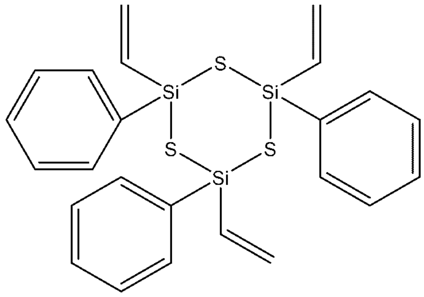
Formula I-14,

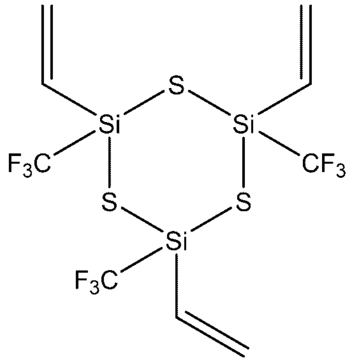
Formula I-15.

5. The battery according to any one of claims 1 to 4, **characterized in that** the fluorinated cyclic carbonate compound has at least one of the structural formulas shown in Formula II:

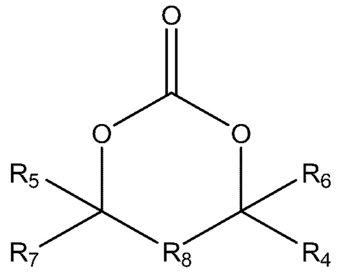
Formula II

wherein in Formula II, $R_4$, $R_5$, $R_6$, and $R_7$ are the same or different and are independently selected from hydrogen, fluorine, alkyl, or fluorine-substituted alkyl, and at least one group of $R_4$, $R_5$, $R_6$, or $R_7$ is selected from fluorine or fluorine-substituted alkyl; and $R_8$ is absent, -CH2- or fluorine substitution.

6. The battery according to claim 5, **characterized in that** $R_4$, $R_5$, $R_6$, and $R_7$ are the same or different and are independently selected from hydrogen, fluorine, $C_{1-12}$ alkyl, or fluorine-substituted $C_{1-12}$ alkyl, and at least one group of $R_4$, $R_5$, $R_6$, or $R_7$ is selected from fluorine or fluorine-substituted $C_{1-12}$ alkyl; and

preferably, $R_4$, $R_5$, $R_6$, and $R_7$ are the same or different and are independently selected from hydrogen, fluorine, $C_{1-6}$ alkyl, or fluorine-substituted $C_{1-6}$ alkyl, and at least one group of $R_4$, $R_5$, $R_6$, or $R_7$ is selected from fluorine or fluorine-substituted $C_{1-6}$ alkyl; or
preferably, $R_4$, $R_5$, $R_6$, and $R_7$ are the same or different and are independently selected from hydrogen, fluorine, $C_{1-3}$ alkyl, or fluorine-substituted $C_{1-3}$ alkyl, and at least one group of $R_4$, $R_5$, $R_6$, or $R_7$ is selected from fluorine or fluorine-substituted $C_{13}$ alkyl.

7. The battery according to any one of claims 1 to 6, **characterized in that** the second additive is selected from at least one of compounds shown in Formula II-1 to Formula II-8:

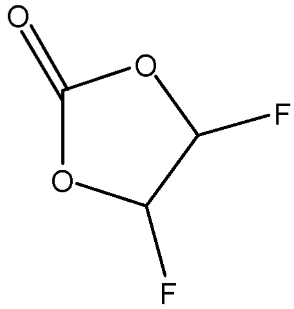 Formula II-1, 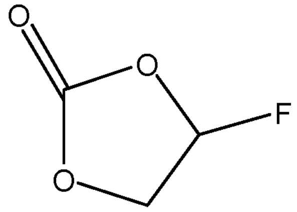 Formula II-2,

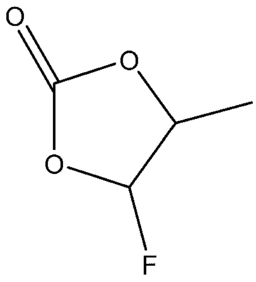 Formula II-3, 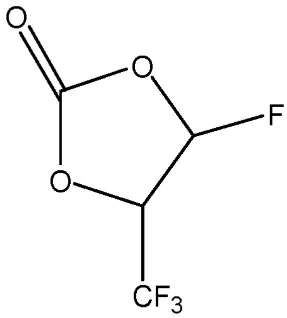 Formula II-4, 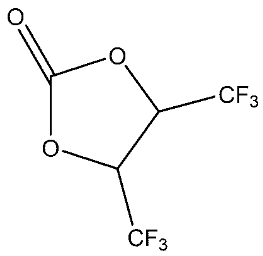

Formula II-5, 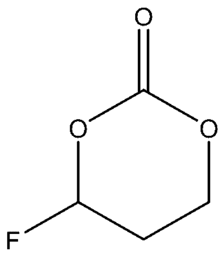 Formula II-6, 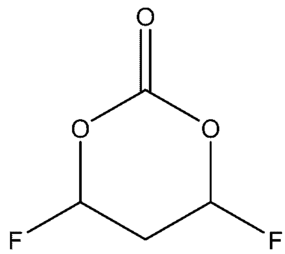 Formula II-7,

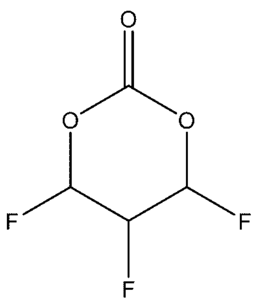 Formula II-8, 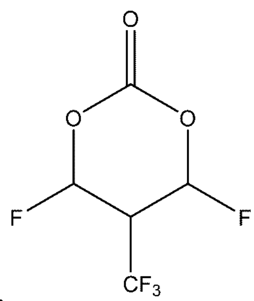 Formula II-9.

**8.** The battery according to any one of claims 1 to 7, wherein 0.05 wt% ≤ a wt% ≤ 5 wt%; and/or 3.5 wt% ≤ b wt% ≤ 15 wt%; and/or 0.0045 g/cm$^2$ ≤ t g/cm$^2$ ≤ 0.028 g/cm$^2$; and/or 0.55 m$^2$/g ≤ p m$^2$/g ≤ 2.35 m$^2$/g.

**9.** The battery according to any one of claims 1 to 8, **characterized in that** 130 ≤ (a + 1/5b)/(t × p) ≤ 200.

**10.** The battery according to any one of claims 1 to 9, **characterized in that** the lithium salt is selected from one or more of lithium hexafluorophosphate ($LiPF_6$), lithium difluorophosphate ($LiPO_2F_2$), lithium difluorooxalate borate(LiDFOB), lithium bis((trifluoromethyl)sulfonyl)azanide, lithium difluorobis(oxalato)phosphate, lithium tetrafluoroborate, lithium bis(oxalate)borate, lithium hexafluoroantimonate, lithium hexafluoroarsenate, lithium bis(trifluoromethyl sulfonyl) imine, lithium bis(pentafluoroethylsulfonyl)imine, tri(trifluoromethyl sulfonyl) methyllithium, or lithium bis(trifluoromethyl sulfonyl)imine; and/or
the organic solvent is selected from carbonate and/or carboxylate, and the carbonate is selected from one or more of following fluorinated or unsubstituted solvents: ethylene carbonate (EC), propylene carbonate (PC), dimethyl carbonate, diethyl carbonate (DEC), or ethyl methyl carbonate; and the carboxylate is selected from one or more

of following fluorinated or unsubstituted solvents: propyl acetate, n-butyl acetate, isobutyl acetate, n-amyl acetate, isoamyl acetate, propyl propionate (PP), ethyl propionate (EP), methyl butyrate, or ethyl n-butyrate.

**11.** The battery according to any one of claims 1 to 10, **characterized in that** a mass of the lithium salt accounts for 10 wt% to 15 wt% of a total mass of the electrolyte solution; and/or
a mass of the organic solvent accounts for 65 wt% to 80 wt% of a total mass of the electrolyte solution.

**12.** The battery according to any one of claims 1 to 11, **characterized in that** the negative electrode active material is at least one of a silicon-based negative electrode material or a carbon-based negative electrode material.

**13.** The battery according to claim 12, **characterized in that** the carbon-based negative electrode material is selected from at least one of artificial graphite, natural graphite, mesocarbon microbeads, hard carbon, or soft carbon; and/or the silicon-based negative electrode material is selected from at least one of a silicon-carbon negative electrode material or a silicon-oxygen negative electrode material; and
preferably, the negative electrode active material is a silicon-carbon and graphite material, or a silicon-oxygen and graphite material.

**14.** The battery according to any one of claims 1 to 13, **characterized in that** the conductive agent is selected from at least one of conductive carbon black, acetylene black, Ketjen black, conductive graphite, conductive carbon fiber, carbon nanotubes, metal powder, or carbon fiber; and/or
the binder is selected from at least one of sodium carboxymethyl cellulose, styrene-butadiene latex, polytetrafluoroethylene, polyethylene oxide, or polyvinylidene fluoride (PVDF).

**15.** The battery according to any one of claims 1 to 14, **characterized in that** mass percentages of components in the negative electrode active material layer are as follows: 80 wt% to 99.8 wt% for the negative electrode active material, 0.1 wt% to 10 wt% for the conductive agent, and 0.1 wt% to 10 wt% for the binder; and
preferably, mass percentages of components in the negative electrode active material layer are as follows: 90 wt% to 99.6 wt% for the negative electrode active material, 0.2 wt% to 5 wt% for the conductive agent, and 0.2 wt% to 5 wt% for the binder.

**INTERNATIONAL SEARCH REPORT**

International application No.
**PCT/CN2023/125748**

**A. CLASSIFICATION OF SUBJECT MATTER**

H01M 10/0567(2010.01)i；H01M 10/42(2006.01)i；H01M 10/0525(2010.01)i；H01M 4/13(2010.01)i

According to International Patent Classification (IPC) or to both national classification and IPC

**B. FIELDS SEARCHED**

Minimum documentation searched (classification system followed by classification symbols)

H01M10/-, H01M4/-

Documentation searched other than minimum documentation to the extent that such documents are included in the fields searched

Electronic data base consulted during the international search (name of data base and, where practicable, search terms used)

CNTXT, ENTXTC, DWPI, CNKI: 电池, 正极, 负极, 隔膜, 电解液, 溶剂, 环状, 硅烷, 氟代, 碳酸酯, 集流体, 活性物质, 粘接剂, 比表面积, battery, positive, negative, diaphragm, electrolyte, solvent, cyclic, silane, fluorinated, carbonate, specific surface area, active material, adhesive, current collector

**C. DOCUMENTS CONSIDERED TO BE RELEVANT**

| Category* | Citation of document, with indication, where appropriate, of the relevant passages | Relevant to claim No. |
|---|---|---|
| Y | CN 103825047 A (SHENZHEN CAPCHEM TECHNOLOGY CO., LTD.) 28 May 2014 (2014-05-28)<br>description, paragraphs 3 and 12-25 | 1-15 |
| Y | CN 111640981 A (ZHUHAI COSMX BATTERY CO., LTD.) 08 September 2020 (2020-09-08)<br>description, paragraphs 36-38, 40, 47, and 49 | 1-15 |
| A | CN 101292389 A (MITSUBISHI CHEMICAL CORP.) 22 October 2008 (2008-10-22)<br>claims 1-199 | 1-15 |
| A | CN 104505534 A (NINGBO VEKEN BATTERY CO., LTD.) 08 April 2015 (2015-04-08)<br>claims 1-9 | 1-15 |
| A | CN 110767939 A (NINGDE CONTEMPORARY AMPEREX TECHNOLOGY CO., LTD.) 07 February 2020 (2020-02-07)<br>claims 1-14 | 1-15 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **17 January 2024** | **25 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2023/125748**

**C. DOCUMENTS CONSIDERED TO BE RELEVANT**

| Category* | Citation of document, with indication, where appropriate, of the relevant passages | Relevant to claim No. |
|---|---|---|
| A | CN 110808411 A (NINGDE CONTEMPORARY AMPEREX TECHNOLOGY CO., LTD.) 18 February 2020 (2020-02-18) claims 1-10 | 1-15 |
| A | CN 114512721 A (XIANG RIVER KUNLUN NEW ENERGY MATERIAL CO., LTD.) 17 May 2022 (2022-05-17) claims 1-9 | 1-15 |
| A | JP 2018078103 A (TOYOTA INDUSTRIES CORP. et al.) 17 May 2018 (2018-05-17) abstract | 1-15 |
| A | US 2022216518 A1 (CONTEMPORARY AMPEREX TECHNOLOGY CO., LTD.) 07 July 2022 (2022-07-07) abstract | 1-15 |
| PX | CN 115954543 A (ZHUHAI COSMX BATTERY CO., LTD.) 11 April 2023 (2023-04-11) claims 1-10 | 1-15 |

Form PCT/ISA/210 (second sheet) (July 2022)

**INTERNATIONAL SEARCH REPORT**
**Information on patent family members**

International application No.
**PCT/CN2023/125748**

| Patent document cited in search report | Publication date (day/month/year) | Patent family member(s) | Publication date (day/month/year) |
|---|---|---|---|
| CN 103825047 A | 28 May 2014 | None | |
| CN 111640981 A | 08 September 2020 | None | |
| CN 101292389 A | 22 October 2008 | None | |
| CN 104505534 A | 08 April 2015 | None | |
| CN 110767939 A | 07 February 2020 | EP 3979385 A1 | 06 April 2022 |
| | | EP 3979385 A4 | 02 August 2023 |
| | | US 2022216518 A1 | 07 July 2022 |
| | | WO 2021073464 A1 | 22 April 2021 |
| CN 110808411 A | 18 February 2020 | None | |
| CN 114512721 A | 17 May 2022 | None | |
| JP 2018078103 A | 17 May 2018 | None | |
| US 2022216518 A1 | 07 July 2022 | None | |
| CN 115954543 A | 11 April 2023 | None | |

Form PCT/ISA/210 (patent family annex) (July 2022)